# EUROPEAN PATENT APPLICATION

(11) **EP 4 510 349 A1**
(43) Date of publication of application: **19.02.2025**
(21) Application number: 22961813.7
(22) Date of filing: 14.10.2022
(51) Int. Cl.: H01M 50/342

(54) **END CAP, BATTERY CELL, BATTERY, ELECTRICAL DEVICE, AND MANUFACTURING METHOD**

(71) Applicant: Contemporary Amperex Technology Co., Limited, Ningde, Fujian 352100 (CN)
(72) Inventor: ZHENG, Ting, Ningde, Fujian 352100 (CN); ZHOU, Wenlin, Ningde, Fujian 352100 (CN); LI, Quankun, Ningde, Fujian 352100 (CN); BAI, Lulu, Ningde, Fujian 352100 (CN)
(74) Representative: Ran, Handong
(86) International application number: PCT/CN2022/125511
(87) International publication number: WO 2024/077627

(57) **Abstract**

The present application relates to the field of batteries, and provides an end cap, a battery cell, a battery, an electrical device, and a manufacturing method. Two sides of the end cap in the thickness direction thereof are respectively provided with a first recess and a second recess. The first recess has a first bottom surface, and the second recess has a second bottom surface. In the thickness direction, a portion of the end cap between the first bottom surface and the second bottom surface forms a pressure relief portion. The pressure relief portion is provided with a weak portion, and the weak portion is configured to be damaged during pressure release of the battery cell. The two sides of the end cap in the thickness direction are respectively provided with the first recess and the second recess, and the first recess and the second recess have a thinning effect, so that the pressure relief portion located between the first bottom surface and the second bottom surface has a relatively thin thickness. In this way, it is easy to form a weak portion in the pressure relief portion, and it is easy to ensure the explosion pressure consistency of the weak portion, so that the weak portion can normally be opened for pressure release under the action of the internal pressure of the battery cell, thereby improving the safety of the battery cell.

## Description

### Technical Field

The present application relates to the field of batteries, and specifically to an end cover, a battery cell, a battery, an electrical device, and a manufacturing method.

### Background Art

Batteries are widely used in the field of new energy, such as electric vehicles, new energy vehicles, etc. New energy vehicles and electric vehicles have become a new trend in the development of the automotive industry. A variety of design factors, for example performance parameters such as battery life, energy density, discharge capacity, and charge/discharge rate, should be taken into consideration simultaneously in the development of battery technologies. In addition, the safety of batteries should also be taken into consideration. However, the existing batteries are poor in safety.

### Summary

Embodiments of the present application aim to provide an end cover, a battery cell, a battery, an electrical device, and a manufacturing method, which are intended to improve the problem of poor safety of batteries in the related art.

In a first aspect, an embodiment of the present application provides an end cover for a battery cell. The end cover is provided with a first recess and a second recess at two sides thereof in its thickness direction, respectively, the first recess has a first bottom surface, and the second recess has a second bottom surface. A pressure relief portion is formed at a portion of the end cover between the first bottom surface and the second bottom surface along the thickness direction, the pressure relief portion has a weakened portion, and the weakened portion is configured to be broken when pressure is to be relieved from the battery cell.

In the above technical solution, the end cover is provided with a first recess and a second recess at two sides thereof in the thickness direction, respectively. The first recess and the second recess achieve a thinning effect, so that the pressure relief portion located between the first bottom surface and the second bottom surface has a thinner thickness. In this way, it is easier to form a weakened portion at the pressure relief portion, and it is easy to ensure a consistent bursting pressure in the weakened portion, so that the weakened portion can be opened normally under the action of the internal pressure of the battery cell to relieve the pressure, which can advantageously enhance the safety of the battery cell.

As an optional technical solution of the embodiment of the present application, the second recess faces an inside of the battery cell, the area of the second bottom surface is larger than the area of the first bottom surface, and a projection of the second bottom surface along the thickness direction covers the first bottom surface.

In the above technical solution, the second bottom surface faces the inside of the battery cell, the area of the second bottom surface is larger than the area of the first bottom surface, and the projection of the second bottom surface along the thickness direction covers the first bottom surface. In this way, when the internal pressure of the battery cell reaches the bursting pressure, the internal pressure can act on the second bottom surface over a large range, so that the pressure relief portion can be deformed along the second bottom surface in a direction toward the first bottom surface. While the pressure relief portion is deformed, the weakened portion arranged at the pressure relief portion is more easily broken, thereby relieving the internal pressure from the battery cell. If the area of the second bottom surface is smaller than the area of the first bottom surface, the internal pressure may act on the second bottom surface in a smaller range, such that the pressure relief portion is less likely to be deformed along the second bottom surface in the direction toward the first bottom surface, which is not advantageous in breakage of the weakened portion arranged at the pressure relief portion.

As an optional technical solution of the embodiment of the present application, along the thickness direction, the end cover has a first surface which faces away from the inside of the battery cell, the first surface is provided with a protrusion, the protrusion has a mounting surface which faces away from the first surface, the first recess is recessed from the mounting surface to the inside of the end cover, and the mounting surface is intended for arrangement of a protector thereon.

In the above technical solution, a protrusion is arranged on the first surface to facilitate arrangement of a protector on the protrusion, so that the protector can serve to protect the weakened portion to reduce the risk of early breakage of the weakened portion by an external force. In addition, the protector shields the weakened portion and can reduce the risk that external impurities such as dust fall into the weakened portion. Furthermore, the protector can also reduce the risk of entry of an electrolyte into the pressure relief portion during injection of the electrolyte. The first recess is recessed from the mounting surface to the inside of the end cover. In this way, the protrusion may be manufactured by means of shaping by stamping, which is simple and convenient and is easy in operation, and which can easily ensure a consistent bursting pressure in a plurality of shaped end covers.

As an optional technical solution of the embodiment of the present application, along the thickness direction, the end cover has a second surface facing the inside of the battery cell, the second recess is recessed from the second surface in a direction close to the first surface, a side surface of the second recess intersects the second surface to form a contour line, and a projection of the protrusion is located within the contour line.

In the above technical solution, the projection of the protrusion along the thickness direction is located within the contour line, so that the protrusion can be shaped by stamping. For example, it is possible to firstly stamp the first recess and then stamp the second recess, and a protruding portion is formed on the first surface during the stamping of the second recess. Such a shaping mode is simple and convenient, is easy in operation, and can easily ensure a consistent bursting pressure in a plurality of shaped end covers.

As an optional technical solution of the embodiment of the present application, the contour line is of a rectangular shape, the protrusion is in an annular structure, the annular structure is in a rectangular shape, a length of a long side of the contour line is greater than a spacing between two outer surfaces of the protrusion that are opposed to each other along a length direction of the contour line, and a length of a short side of the contour line is greater than a spacing between two outer surfaces of the protrusion that are opposed to each other along a width direction of the contour line.

In the above technical solution, the length of the long side of the contour line is greater than the spacing between two outer surfaces of the protrusion that are opposed to each other along the length direction of the contour line, and the length of the short side of the contour line is greater than the spacing between two outer surfaces of the protrusion that are opposed to each other along the width direction of the contour line, so that there is an interval between the outer surface of the protrusion and the contour line so as to facilitate the formation of the protrusion on the first surface during stamping of the second recess by a stamping device.

As an optional technical solution of the embodiment of the present application, a first notched groove is arranged in the pressure relief portion, and the weakened portion is formed at a position of the pressure relief portion where the first notched groove is arranged.

In the above technical solution, the first notched groove is arranged in the pressure relief portion to form the weakened portion, which is simple and convenient, is easy in machining, and involves low production cost. In addition, the first notched groove may be shaped by means of stamping. Since the end cover is provided with the first recess and the second recess such that the pressure relief portion has a thinner thickness, the depth of the first notched groove does not have to be too deep, whereby the material accumulation during stamping of the first notched groove can be reduced, and a consistent bursting pressure in a plurality of shaped end covers can be easily ensured.

As an optional technical solution of the embodiment of the present application, the pressure relief portion has a pressure relief region, the first notched groove is arranged along an edge of the pressure relief region, and the pressure relief region is configured to be opened with the first notched groove as a boundary when pressure is to be relieved from the battery cell.

In the above technical solution, the first notched groove is arranged along the edge of the pressure relief region, thus the pressure relief region will be opened along the edge to provide a large opening allowing gases to pass therethrough when pressure is to be relieved from the battery cell.

As an optional technical solution of the embodiment of the present application, a second notched groove is arranged in the pressure relief portion, and the pressure relief region is configured to be opened with the second notched groove as a rotating axis when pressure is to be relieved from the battery cell.

In the above technical solution, the second notched groove is arranged in the pressure relief portion such that the pressure relief portion has lower strength at the position of the second notched groove. When pressure is to be relieved from the battery cell, the first notched groove is cracked first to allow the gases in the battery cell to flow out to relieve the pressure. Meanwhile, since the second notched groove is arranged, the strength of the pressure relief portion is weakened, so that the pressure relief region is easily turned outward around the second notched groove as a rotating axis under the action of the gases so as to open a larger opening to achieve rapid pressure relief.

As an optional technical solution of the embodiment of the present application, one of the first notched groove and the second notched groove is arranged in the first bottom surface, and the other of the first notched groove and the second notched groove is arranged in the second bottom surface.

In the above technical solution, one of the first notched groove and the second notched groove is arranged in the first bottom surface, and the other of the first notched groove and the second notched groove is arranged in the second bottom surface, so that the first notched groove and the second notched groove are shaped without interfering with each other, which can easily ensure a consistent bursting pressure in a plurality of shaped end covers.

As an optional technical solution of the embodiment of the present application, the pressure relief portion has a thickness at the position where the first notched groove is arranged smaller than a thickness at a position of the second notched groove.

In the above technical solution, the pressure relief portion has a smaller thickness at the position of the first notched groove. That is to say, the first notched groove has a larger depth. The pressure relief portion has a larger thickness at the position of the second notched groove. That is to say, the second notched groove has a smaller depth. In this way, the pressure relief portion has higher strength at the position of the second notched groove, which is not likely to be cracked prior to the first notched groove under the action of the internal pressure. Thus, it is ensured that when pressure is to be relieved from the battery cell, the first notched groove is cracked first to allow the gases in the battery cell to flow out to relieve the pressure. Then, the pressure relief region is turned outward around the second notched groove as a rotating axis under the action of the gases so as to open a larger opening to achieve rapid pressure relief.

As an optional technical solution of the embodiment of the present application, the first notched groove comprises a first groove section, a second groove section, and a third groove section, the first groove section and the second groove section are arranged in parallel, the third groove section intersects the first groove section and the second groove section respectively so as to divide the pressure relief portion into two pressure relief regions, and the pressure relief regions are provided with the second notched grooves in a one-to-one correspondence manner.

In the above technical solution, the first groove section, the second groove section, and the third groove section jointly define two pressure relief regions partitioned by the third groove section. During pressure relief, the two pressure relief regions can be opened rapidly in such a manner that they are opened oppositely, whereby a sufficient pressure relief area is ensured, while the pressure relief regions are opened with improved efficiency to achieve rapid pressure relief so as to enhance the safety of the battery cell.

As an optional technical solution of the embodiment of the present application, the first groove section comprises a first end and a second end, the second groove section comprises a third end and a fourth end, the first end is opposed to the third end, the second notched groove extending along a line connecting the first end and the third end is a first groove, the second notched groove extending along a line connecting the second end and the fourth end is a second groove, and the first groove is arranged in parallel to the second groove.

In the above technical solution, the first groove and the second groove are arranged in parallel, such that the two pressure relief regions are not likely to interfere with each other when pressure is to be relieved from the battery cell.

As an optional technical solution of the embodiment of the present application, the line connecting the first end and the third end has a length of D in unit of mm, and the first groove has a length of F in unit of mm, where 0.5≤D-F≤3 is satisfied.

In the above technical solution, the length of the first groove is smaller by 0.5 to 3 mm than the length of the line connecting the first end and the third end, so that the length of the first groove can be set as long as possible provided that the first groove and the first notched groove do not interfere with each other. If D-F is less than 0.5 mm, the first groove is closely distanced from the first notched groove, and the first groove easily interferes with the first notched groove during shaping of the first groove and the first notched groove, thereby affecting the bursting pressure of the battery cell. If D-F is more than 3 mm, the first groove is far distanced from the first groove section or the second groove section, such that the pressure relief portion has higher strength at a straight line where the first groove is located, and the pressure relief region can hardly be turned outward around the first groove.

As an optional technical solution of the embodiment of the present application, the first groove section has a length of C in unit of mm, and there is a spacing of E in unit of mm between the first groove and the second groove, where -2≤C-E≤2 is satisfied.

In the above technical solution, if C-E is less than -2, it is indicated that there is a large spacing between the first groove and the second groove, and at least one of the first groove and the second groove is far away from the first notched groove. In this way, the pressure relief region can hardly be turned outward around the second notched groove that is far away from the first notched groove. If C-E is more than 2, it is indicated that there is a small spacing between the first groove and the second groove, and at least one of the first groove and the second groove is close to the third groove section, such that the corresponding pressure relief region can only be turned outward and opened by a small area, which is not advantageous in rapid pressure relief.

As an optional technical solution of the embodiment of the present application, the first notched groove further comprises a fourth groove section, and the fourth groove section is located between the first groove section and the second groove section and intersects the third groove section.

In the above technical solution, the fourth groove section is arranged to increase the range of the weakened portion, so that the weakened portion is more easily opened under the action of the internal pressure of the battery cell to relieve pressure. In addition, when the battery cell begins to release pressure, the pressure relief portion may crack along the third groove section and the fourth groove section to partially relieve pressure before the pressure relief regions are completely opened, so as to enhance the safety of the battery cell.

As an optional technical solution of the embodiment of the present application, the fourth groove section is parallel to the first groove section, and the third groove section is perpendicular to the first groove section.

In the above technical solution, the fourth groove section is parallel to the first groove section, so that the fourth groove section can be easily cracked. The third groove section is perpendicular to the first groove section, such that the third groove section has a shorter length than that of a third groove section formed at an acute angle relative to the first groove section and can be quickly cracked when pressure is to be relieved from the battery cell.

As an optional technical solution of the embodiment of the present application, the first notched groove comprises a first groove section and a second groove section, and the first groove section and the second groove section are arranged crosswise so as to divide the pressure relief portion into four pressure relief regions.

In the above technical solution, the first groove section and the second groove section are arranged crosswise, such that when pressure is to be relieved from the battery cell, the first groove section and the second groove section are most likely to crack at their intersection point and can crack toward both ends of the first groove section and the second groove section after the intersection point is cracked, whereby the entire first and second groove sections are cracked quickly to relieve pressure at a fast speed, which can advantageously enhance the safety of the battery cell.

As an optional technical solution of the embodiment of the present application, the pressure relief regions are provided with the second notched grooves in a one-to-one correspondence manner.

In the above technical solution, the first groove section and the second groove section are arranged crosswise, thus the pressure relief portion is divided into four pressure relief regions. Each pressure relief region is correspondingly provided with one second notched groove. In this way, when pressure is to be relieved from the battery cell, each pressure relief region can be turned outward around the corresponding second notched groove as a rotating axis to open a larger opening to achieve rapid pressure relief.

As an optional technical solution of the embodiment of the present application, the first groove section comprises a first end and a second end, the second groove section comprises a third end and a fourth end, the second notched groove extending along a line connecting the first end and the third end is a first groove, the second notched groove extending along a line connecting the first end and the fourth end is a second groove, the second notched groove extending along a line connecting the second end and the third end is a third groove, the second notched groove extending along a line connecting the second end and the fourth end is a fourth groove, the first groove is arranged in parallel to the fourth groove, and the second groove is arranged in parallel to the third groove.

In the above technical solution, the first groove and the fourth groove are arranged in parallel, and the second groove and the third groove are arranged in parallel. In this way, when pressure is to be relieved from the battery cell, the four pressure relief regions are not likely to interfere with one another and can be opened simultaneously to form a larger opening allowing gases to flow out therethrough.

As an optional technical solution of the embodiment of the present application, the line connecting the first end and the third end has a length of Z in unit of mm, and the first groove has a length of W in unit of mm, where 0.5≤Z-W≤2.5 is satisfied; and/or the line connecting the first end and the fourth end has a length of Y in unit of mm, and the second groove has a length of U in unit of mm, where 0.5≤Y-U≤2.5 is satisfied.

In the above technical solution, the length of the first groove is smaller by 0.5 to 2.5 mm than the length of the line connecting the first end and the third end, so that the length of the first groove can be set as long as possible provided that the first groove and the first notched groove do not interfere with each other. If Z-W is less than 0.5 mm, the first groove is closely distanced from the first notched groove, and the first groove easily interferes with the first notched groove during shaping of the first groove and the first notched groove, thereby affecting the bursting pressure of the battery cell. If Z-W is more than 2.5 mm, the first groove is far distanced from the first groove section and the second groove section, such that the pressure relief portion has higher strength at a straight line where the first groove is located, and the pressure relief region can hardly be turned outward around the first groove. The length of the second groove is smaller by 0.5 to 2.5 mm than the length of the line connecting the first end and the fourth end, so that the length of the second groove can be set as long as possible provided that the second groove and the first notched groove do not interfere with each other. If Y-U is less than 0.5 mm, the second groove is closely distanced from the first notched groove, and the second groove easily interferes with the first notched groove during shaping of the second groove and the first notched groove, thereby affecting the bursting pressure of the battery cell. If Y-U is more than 2.5 mm, the second groove is far distanced from the first groove section and the second groove section, such that the pressure relief portion has higher strength at a straight line where the second groove is located, and the pressure relief region can hardly be turned outward around the second groove.

As an optional technical solution of the embodiment of the present application, there is a spacing of X in unit of mm between the second groove and the third groove along a direction of extension of the first groove, where -2≤Z-X≤2 is satisfied; and/or there is a spacing of V in unit of mm between the first groove and the fourth groove along a direction of extension of the second groove, where -2≤Y-V≤2 is satisfied.

In the above technical solution, if Z-X is less than -2, it is indicated that there is a large spacing between the second groove and the third groove, and at least one of the second groove and the third groove is far away from the first notched groove. In this way, the pressure relief region can hardly be turned outward around the second notched groove that is far away from the first notched groove. If Z-X is more than 2, it is indicated that there is a small spacing between the second groove and the third groove, and at least one of the second groove and the third groove is close to the intersection point of the first groove section and the second groove section, such that the corresponding pressure relief region can only be turned outward and opened by a small area, which is not advantageous in rapid pressure relief. If Y-V is less than -2, it is indicated that there is a large spacing between the first groove and the fourth groove, and at least one of the first groove and the fourth groove is far away from the first notched groove. In this way, the pressure relief region can hardly be turned outward around the second notched groove that is far away from the first notched groove. If Y-V is more than 2, it is indicated that there is a small spacing between the first groove and the fourth groove, and at least one of the first groove and the fourth groove is close to the intersection point of the first groove section and the second groove section, such that the corresponding pressure relief region can only be turned outward and opened by a small area, which is not advantageous in rapid pressure relief.

In a second aspect, an embodiment of the present application further provides a battery cell. The battery cell comprises an electrode assembly, a housing, and an end cover described above. The housing has an accommodating space with an opening at one end. The accommodating space is intended for accommodating the electrode assembly. The end cover closes the opening.

In a third aspect, an embodiment of the present application further provides a battery. The battery comprises a battery cell described above.

In a fourth aspect, an embodiment of the present application further provides an electrical device comprising a battery described above, the battery being intended for supplying electrical energy to the electrical device.

In a fifth aspect, an embodiment of the present application further provides a manufacturing method. The manufacturing method is intended for manufacturing an end cover described above. The manufacturing method comprises: providing the end cover; shaping a first recess and a second recess at two sides of the end cover in a thickness direction, the first recess having a first bottom surface, the second recess having a second bottom surface; forming a pressure relief portion at a portion of the end cover between the first bottom surface and the second bottom surface along the thickness direction; shaping a weakened portion in the pressure relief portion, the weakened portion being configured to be broken when pressure is to be relieved from the battery cell.

As an optional technical solution of the embodiment of the present application, the step of shaping a first recess and a second recess at two sides of the end cover in a thickness direction comprises: shaping the first recess at one side of the end cover in the thickness direction by stamping; shaping the second recess at the other side of the end cover in the thickness direction by stamping, and forming a protrusion on a surface of the end cover in which the first recess is shaped.

In the above technical solution, the first recess is firstly stamped at one side of the end cover in the thickness direction, and then the second recess is stamped at the other side, and a protruding portion is formed on the first surface during the stamping of the second recess. Such a shaping mode is simple and convenient, is easy in operation, and can easily ensure a consistent bursting pressure in a plurality of shaped end covers.

### Brief Description of Drawings

In order to more clearly illustrate the technical solutions of embodiments of the present application, drawings required to be used in the embodiments will be described briefly below. It is understood that the drawings below are merely illustrative of some embodiments of the present application and thus should not be considered as limiting its scope. It will be appreciated by those of ordinary skill in the art that other relevant drawings can be obtained according to these drawings without any inventive effort.
FIG. 1 is a schematic structural view of a vehicle according to some embodiments of the present application.
FIG. 2 is an exploded view of a battery according to some embodiments of the present application.
FIG. 3 is an exploded view of a battery cell according to some embodiments of the present application.
FIG. 4 is a schematic structural view of a front side of an end cover according to some embodiments of the present application.
FIG. 5 is a schematic top view of an end cover according to some embodiments of the present application.
FIG. 6 is a sectional view taken at position A-A of FIG. 5.
FIG. 7 is a schematic structural view of a front side of an end cover (provided with a protector) according to some embodiments of the present application.
FIG. 8 is a schematic structural view of a reverse side of an end cover according to some embodiments of the present application.
FIG. 9 is a schematic structural view of a first notched groove according to some embodiments of the present application.
FIG. 10 is a schematic structural view of a second notched groove according to some embodiments of the present application.
FIG. 11 is a schematic structural view of a front side of an end cover according to some other embodiments of the present application.
FIG. 12 is a schematic structural view of a first notched groove according to some other embodiments of the present application.
FIG. 13 is a schematic structural view of a second notched groove according to some other embodiments of the present application.
FIG. 14 is a schematic block diagram of a manufacturing method according to some embodiments of the present application.

Reference Numerals: 10-casing, 11-first part, 12-second part, 20-battery cell, 21-end cover, 211-first recess, 2111-first bottom surface, 212-second recess, 2121-second bottom surface, 2122-contour line, 213-pressure relief portion, 2131-pressure relief region, 214-weakened portion, 215-first notched groove, 2151-first groove section, 21511-first end, 21512-second end, 21152-second groove section, 21521-third end, 21522-fourth end, 2153-third groove section, 2154-fourth groove section; 216-second notched groove; 2161-first groove; 2162-second groove; 2163-third groove; 2164-fourth groove; 217-first surface; 218-second surface; 219-protrusion; 2191-mounting surface; 220-protector; 22-electrode assembly; 23-housing; 100-battery; 200-controller; 300-motor; 1000-vehicle.

### Detailed Description of Embodiments

In order to further clarify the objects, technical solutions, and advantages of the embodiments of the present application, the technical solutions of the embodiments of the present application will be described below clearly with reference to the drawings of the embodiments of the present application. It is apparent that the embodiments to be described are some, but not all of the embodiments of the present application. All the other embodiments obtained by those of ordinary skill in the art in light of the embodiments of the present application without inventive efforts will fall within the scope of the present application as claimed.

Unless otherwise defined, all technical and scientific terms used herein have the same meanings as commonly understood by those skilled in the art to which the present application pertains. The terms used in the specification of the present application are used for the purpose of describing specific embodiments only and are not intended to limit the present application. The terms "comprising", "having", and any other variants in the specification and the claims of the present application and in the above description of the drawings are intended to cover non-exclusive inclusions. The terms such as "first" and "second" in the specification and the claims of the present application or in the above drawings are intended to distinguish between different objects, but are not intended to describe a specific order or a primary and secondary relationship.

It is meant by the term "embodiment" as referred to in the present application that a specific feature, structure, or characteristic described in conjunction with an embodiment may be included in at least one embodiment of the present application. The appearance of the term at various places in the specification does not necessarily refer to the same embodiment, nor does it refer to an independent or alternative embodiment that is mutually exclusive with other embodiments.

In the description of the present application, it should be noted that the terms "mount", "couple", "connect", and "attach" should be understood in a broad sense unless otherwise expressly specified or defined. For example, connection may be fixed connection or detachable connection or integral connection, or may be direct coupling or indirect coupling via an intermediate medium or internal communication between two elements. The specific meanings of the above-mentioned terms in the present application can be understood by those of ordinary skill in the art according to specific situations.

The term "and/or" in the present application is merely a description of an association relationship between associated objects, indicating that there may be three relationships therebetween. For example, A and/or B may indicate the following three cases: the existence of A alone, the existence of both A and B, and the existence of B alone. In addition, the character "/" in the present application generally indicates an "OR" relationship between the preceding and following associated objects.

In the embodiments of the present application, the same reference numerals indicate the same components, and a detailed description of the same components is omitted in different embodiments for the sake of brevity. It should be understood that the dimensions such as the thickness, length, and width of the various components in the embodiments of the present application shown in the drawings as well as the dimensions such as the overall thickness, length, and width of the integrated device are only illustrative and descriptive and do not constitute any limitation on the present application.

The phrase "plurality of" appearing in the present application means two or more (including two).

In the present application, battery cells may include lithium-ion secondary battery cells, lithium-ion primary battery cells, lithium-sulfur battery cells, sodium-lithium-ion battery cells, sodium-ion battery cells, magnesium-ion battery cells, or the like, which are not limited in the embodiments of the present application. The battery cells may be in the form of cylinders, flat bodies, cuboids, or other shapes, which are also not limited in the embodiments of the present application. The battery cells are generally divided into the following three types according to the packaging mode: cylindrical battery cells, square battery cells, and pouch battery cells, which are also not limited in the embodiments of the present application.

A battery mentioned in an embodiment of the present application refers to a single physical module comprising one or more battery cells to supply a higher voltage and capacity. For example, a battery mentioned in the present application may include a battery module or a battery pack or the like. A battery generally comprises a casing for packaging one or more battery cells. The casing may prevent liquids or other foreign objects from affecting charging or discharging of the battery cell(s).

A battery cell comprises an electrode assembly and an electrolyte, and the electrode assembly consists of a positive electrode (cathode) sheet, a negative electrode (anode) sheet, and a separator. The battery cell works depending mainly on a movement of metal ions between the positive electrode sheet and the negative electrode sheet. The positive electrode sheet comprises a positive electrode current collector and a positive electrode active material layer. The positive electrode active material layer is coated on the surface of the positive electrode current collector. The positive electrode current collector that is not coated with the positive electrode active material layer is protruding from the positive electrode current collector that has been coated with the positive electrode active material layer. The positive electrode current collector that is not coated with the positive electrode active material layer is used as a positive lug. Taking a lithium-ion battery as an example, the material of the positive electrode current collector may be aluminum, and the positive electrode active material may be a lithium cobalt oxide, a lithium iron phosphate, a ternary lithium or lithium manganese oxide, or the like. The negative electrode sheet comprises a negative electrode current collector and a negative electrode active material layer. The negative electrode active material layer is coated on the surface of the negative electrode current collector. The negative electrode current collector that is not coated with the negative electrode active material layer is protruding from the negative electrode current collector that has been coated with the negative electrode active material layer. The negative electrode current collector that is not coated with the negative electrode active material layer is used as a negative lug. The material of the negative electrode current collector may be copper, and the negative electrode active material may be carbon or silicon or the like. In order to ensure passage of a large current without fusing, a plurality of positive lugs are provided and stacked on top of one another, and a plurality of negative lugs are provided and stacked on top of one another. The material of the separator may be PP (polypropylene) or PE (polyethylene) or the like. Further, the electrode assembly may have a winding structure or a laminated structure, which is not limited in the embodiments of the present application.

Currently, batteries are used more and more widely from the perspective of the development of the market situation. Batteries are not only used in energy storage power systems such as hydropower, thermal power, wind power, and solar power stations, but also are widely used in electric vehicles such as electric bicycles, electric motorcycles, and electric vehicles, as well as in multiple fields of military equipment, aerospace, and the like. As batteries are used in increasingly expanding fields, the market demand for batteries is also increasingly expanding.

A variety of design factors, for example performance parameters such as battery life, energy density, discharge capacity, and charge/discharge rate, should be taken into consideration simultaneously in the development of battery technologies. In addition, the safety of batteries should also be taken into consideration. However, the existing batteries are poor in safety.

For a battery cell, a pressure relief mechanism may be arranged at an end cover of the battery cell in order to ensure the safety of the battery cell. When the internal pressure of the battery cell reaches a bursting pressure, the pressure relief mechanism is opened to relieve pressure inside the battery cell to reduce the risk of explosion or ignition of the battery cell.

The inventors have noticed that, in the prior art, a notch is formed in an end cover by stamping, so that the end cover has a weakened portion formed at the position of the notch. When the internal pressure of a battery cell reaches the bursting pressure, the weakened portion is broken to relieve the pressure inside the battery cell. However, due to the thick thickness of the end cover, it is difficult to directly form a notch flow material in the end cover by stamping, which can easily lead to material accumulation, and the formed weakened portion is likely to have an inconsistent bursting pressure. In this way, the weakened portion is not likely to be broken when the internal pressure of the battery cell reaches the bursting pressure, or the weakened portion has been broken before the internal pressure of the battery cell reaches the bursting pressure. As a result, the normal pressure relieving function cannot be achieved, and the risk of explosion or ignition of the battery cell increases, resulting in the poor safety of the battery cell.

In view of this, an embodiment of the present application provides an end cover. The end cover is provided with a first recess and a second recess at two sides thereof in its thickness direction, respectively. The first recess has a first bottom surface, and the second recess has a second bottom surface. A pressure relief portion is formed at a portion of the end cover between the first bottom surface and the second bottom surface along the thickness direction. The pressure relief portion has a weakened portion, and the weakened portion is configured to be broken when pressure is to be relieved from the battery cell.

The end cover is provided with a first recess and a second recess at two sides thereof in the thickness direction, respectively. The first recess and the second recess achieve a thinning effect, so that the pressure relief portion located between the first bottom surface and the second bottom surface has a thinner thickness. In this way, it is easy to ensure a consistent bursting pressure in the weakened portion arranged in the pressure relief portion, so that the weakened portion can be opened normally under the action of the internal pressure of the battery cell to relieve the pressure, which can advantageously enhance the safety of the battery cell.

The technical solutions described in the embodiments of the present application are applicable to batteries and electrical devices using the batteries.

The electrical devices may be vehicles, mobile phones, portable devices, laptops, ships, spacecrafts, electric toys, electric tools, and so on. The spacecrafts include airplanes, rockets, space shuttles, spaceships, and the like. The electric toys include stationary or mobile electric toys, such as game consoles, electric car toys, electric ship toys, electric airplane toys, and the like. The electric tools include electric metal-cutting tools, electric grinding tools, electric assembling tools, and electric railway tools, such as electric drills, electric grinders, electric wrenches, electric screwdrivers, electric hammers, electric impact drills, concrete vibrators, electric planers, and the like. The above-mentioned electrical devices are not specially limited in the embodiments of the present application.

In the following embodiments, a vehicle 100 is described as an example of the electrical device for convenience in description.

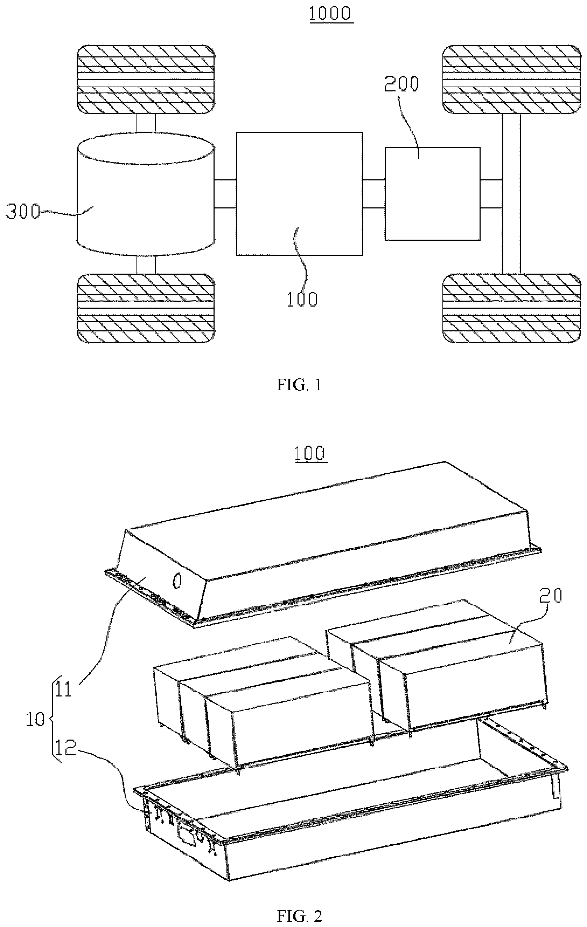

Referring to FIG. 1, FIG. 1 is a schematic structural view of the vehicle 1000 according to some embodiments of the present application. The vehicle 1000 may be a fuel vehicle, a gas vehicle, or a new energy vehicle, and the new energy vehicle may be a pure electric vehicle, a hybrid vehicle, a range-extended vehicle, or the like. A battery 100 is arranged in the interior of the vehicle 1000, and the battery 100 may be arranged in the bottom or head or tail of the vehicle 1000. The battery 100 may be used for powering the vehicle 1000. For example, the battery 100 may be used as an operating power supply for the vehicle 1000. The vehicle 1000 may further comprise a controller 200 and a motor 300. The controller 200 is used for controlling the battery 100 to supply power to the motor 300, for example, for supplying working power required by the vehicle 1000 during starting, navigating, and driving.

In some embodiments of the present application, the battery 100 may be used not only as the operating power supply for the vehicle 1000, but also as a driving power supply for the vehicle 1000, which supplies driving power to the vehicle 1000 instead of or partially instead of fuel or natural gas.

Referring to FIG. 2, FIG. 2 is an exploded view of the battery 100 according to some embodiments of the present application. The battery 100 comprises a casing 10 and a battery cell 20, and the battery cell 20 is accommodated in the casing 10. Here, the casing 10 is used for providing an accommodating space for the battery cell 20, and the casing 10 may employ a variety of structures. In some embodiments, the casing 10 may comprise a first part 11 and a second part 12, the first part 11 and the second part 12 are closed by each other, and the first part 11 and the second part 12 jointly define an accommodating space for accommodating the battery cell 20. The second part 12 may have a hollow structure open at one end, the first part 11 may have a plate-like structure, and the first part 11 covers and closes the open side of the second part 12, so that the first part 11 and the second part 12 jointly define the accommodating space. The first part 11 and the second part 12 may also each have a hollow structure open on one side, and the open side of the first part 11 covers and closes the open side of the second part 12. Of course, the casing 10 formed by the first part 11 and the second part 12 may have a variety of shapes, such as a cylinder, a cuboid, and the like.

In the battery 100, there may be a plurality of battery cells 20, and the plurality of battery cells 20 may be connected in series or in parallel or in series-parallel, where the series-parallel connection means that the plurality of battery cells 20 are connected both in series and in parallel. The plurality of battery cells 20 may be directly connected together in series or in parallel or in series-parallel, and then the plurality of battery cells 20 are accommodated as a whole in the casing 10. Of course, the battery 100 may also be formed by firstly connecting the plurality of battery cells 20 in series or in parallel or in series-parallel in the form of battery modules, and then connecting the plurality of battery modules in series or in parallel or in series-parallel as a whole and accommodating them in the casing 10. The battery 100 may further comprise other structures. For example, the battery 100 may further comprise a busbar component for achieving the electrical connection between the plurality of battery cells 20.

Here, each battery cell 20 may be a secondary battery cell or a primary battery cell, or may be a lithium-sulfur battery cell, a sodium-ion battery cell, or a magnesium-ion battery cell, but is not limited thereto. The battery cell 20 may be in the shape of a cylinder, a flat body, a cuboid, or other shapes.

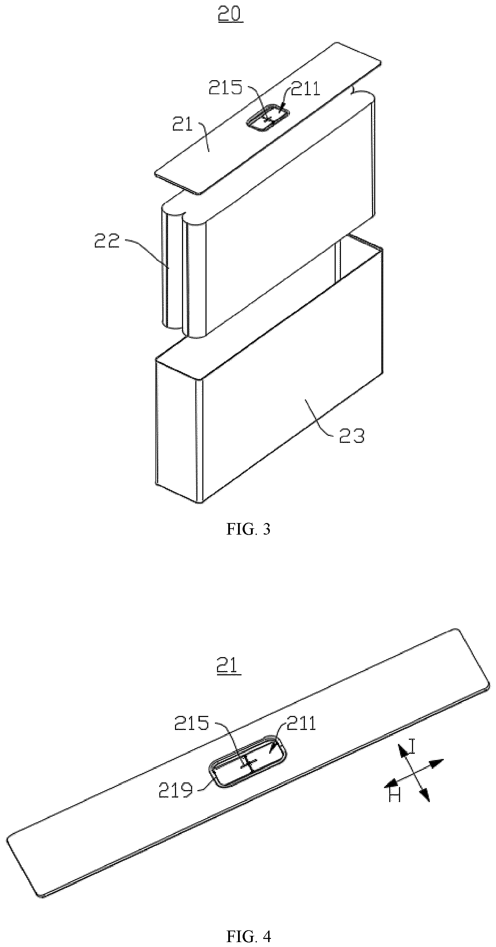

Referring to FIG. 3, FIG. 3 is an exploded view of the battery cell 20 according to some embodiments of the present application. The battery cell 20 refers to the smallest unit that constitutes the battery 100. As shown in FIG. 3, the battery cell 20 comprises an end cover 21, an electrode assembly 22, and a housing 23.

The end cover 21 refers to a component covering and closing the opening of the housing 23 to isolate the internal environment of the battery cell 20 from the external environment. Non-limitingly, the shape of the end cover 21 may be adapted to the shape of the housing 23 to match the housing 23. Optionally, the end cover 21 may be made of a material (e.g., an aluminum alloy) with certain hardness and strength. In this way, the end cover 21 is not likely to be deformed when it is squeezed, pressed, or collided, so that the battery cell 20 can have higher structural strength and can also have improved safety performance. The end cover 21 may also be made of a variety of materials, such as copper, iron, aluminum, stainless steel, an aluminum alloy, plastic, or the like, which is not specially limited in the embodiments of the present application. The battery cell 20 may further comprise an electrode terminal (not shown in the figure), and the electrode terminal is arranged at the end cover 21. The electrode terminal may be used for being electrically connected to the electrode assembly 22 for outputting or inputting electrical energy from or into the battery cell 20.

The housing 23 is a component for matching the end cover 21 to form the internal environment of the battery cell 20, where the formed internal environment may be used for accommodating the electrode assembly 22, an electrolyte, and other components. The housing 23 and the end cover 21 may be separate components, an opening may be arranged in the housing 23, and the opening may be covered and closed by the end cover 21 to form the internal environment of the battery cell 20. Non-limitingly, the end cover 21 and the housing 23 may also be integrated. Specifically, the end cover 21 and the housing 23 may form a common connecting surface before other components are placed into the housing, and then the housing 23 is covered and closed by the end cover 21 when the inside of the housing 23 needs to be packaged. The housing 23 may have a variety of shapes and a variety of dimensions, for example, in the shape of a cuboid, a cylinder, a hexagonal prism, or the like. Specifically, the shape of the housing 23 may be determined according to the specific shape, dimension, and size of the electrode assembly 22. The housing 23 may be made of a variety of materials, such as copper, iron, aluminum, stainless steel, an aluminum alloy, plastic, or the like, which is not specially limited in the embodiments of the present application.

The electrode assembly 22 is a component of the battery cell 20 in which an electrochemical reaction occurs. The housing 23 may contain one or more electrode assemblies 22. The electrode assembly 22 is mainly formed by winding or stacked placement of a positive electrode sheet and a negative electrode sheet, and a separator is usually arranged between the positive electrode sheet and the negative electrode sheet. Portions of the positive electrode sheet and the negative electrode sheet that have active materials constitute a body portion of the electrode assembly 22, and portions of the positive electrode sheet and the negative electrode sheet that do not have active materials each constitute a lug. The positive electrode lug and the negative electrode lug may be both located at one end of the body portion or respectively located at the two ends of the body portion. During charging and discharging of the battery 100, the positive electrode active material and the negative electrode active material react with the electrolyte, and the lugs are connected to the electrode terminals to form a current circuit.

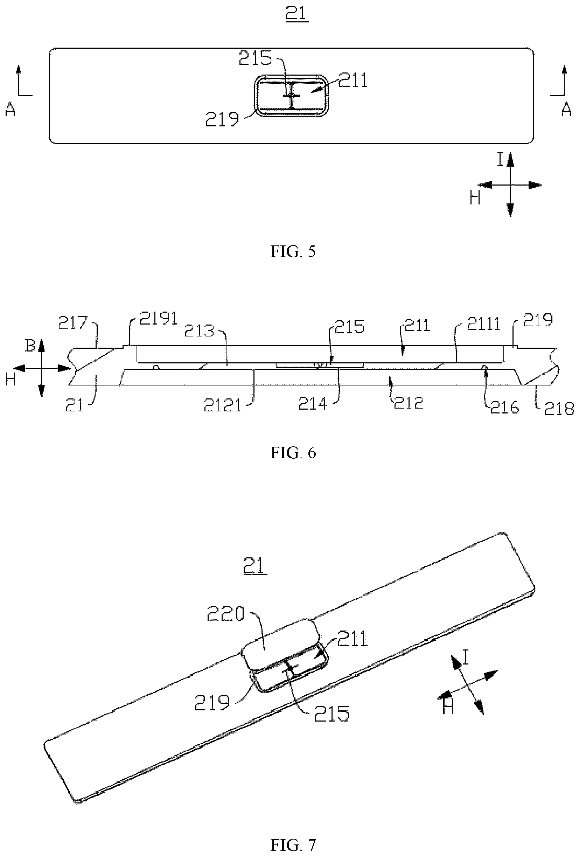

Referring to FIGS. 3, 4, 5, and 6, FIG. 3 is an exploded view of the battery cell 20 according to some embodiments of the present application. FIG. 4 is a schematic structural view of the front side of the end cover 21 according to some embodiments of the present application. FIG. 5 is a schematic top view of the end cover 21 according to some embodiments of the present application. FIG. 6 is a sectional view taken at position A-A of FIG. 5. An embodiment of the present application provides an end cover 21. The end cover 21 is provided with a first recess 211 and a second recess 212 at two sides thereof in its thickness direction, respectively. The first recess 211 has a first bottom surface 2111, and the second recess 212 has a second bottom surface 2121. A pressure relief portion 213 is formed at a portion of the end cover 21 between the first bottom surface 2111 and the second bottom surface 2121 along the thickness direction. The pressure relief portion 213 has a weakened portion 214, and the weakened portion 214 is configured to be broken when pressure is to be relieved from the battery cell 20.

In this embodiment, one side provided with the first recess 211 is regarded as the front side of the end cover 21, and one side provided with the second recess 212 is regarded as the reverse side of the end cover 21.

As shown in FIG. 6, the thickness direction of the end cover 21 may be a direction B in the figure.

The first recess 211 and the second recess 212 are groove-like structures in the end cover 21. The first recess 211 and the second recess 212 are arranged at the two sides of the end cover 21 in the thickness direction, respectively. When the first recess 211 is arranged at one side of the end cover 21 that faces toward the inside of the battery cell 20, the second recess 212 is arranged at one side of the end cover 21 that faces away from the inside of the battery cell 20. When the second recess 212 is arranged at one side of the end cover 21 that faces toward the inside of the battery cell 20, the first recess 211 is arranged at one side of the end cover 21 that faces away from the inside of the battery cell 20. The positions of the first recess 211 and the second recess 212 correspond to each other. The shapes of the first recess 211 and the second recess 212 are not limited. For example, the first recess 211 and the second recess 212 may be either rectangular or circular. The shape of the first recess 211 may be the same as the shape of the second recess 212, or may be different from the shape of the second recess 212. The mode of shaping of the first recess 211 and the second recess 212 is not limited. For example, the first recess 211 and the second recess 212 may be shaped by stamping, or may be shaped by milling.

The side surface of the first recess 211 is arranged around the edge of the first bottom surface 2111. Optionally, the first bottom surface 2111 is a flat surface, and the first bottom surface 2111 is perpendicular to the thickness direction of the end cover 21.

The side surface of the second recess 212 is arranged around the edge of the second bottom surface 2121. Optionally, the second bottom surface 2121 is a flat surface, the second bottom surface 2121 is perpendicular to the thickness direction of the end cover 21, and the first bottom surface 2111 is parallel to the second bottom surface 2121.

The pressure relief portion 213 is a portion of the end cover 21 between the first bottom surface 2111 and the second bottom surface 2121 along the thickness direction. In other words, the first bottom surface 2111 and the second bottom surface 2121 are also two surfaces of the pressure relief portion 213 that are opposed to each other in the thickness direction.

The weakened portion 214 is a portion of the pressure relief portion 213 that has lower strength. Since the weakened portion 214 has lower strength, when the internal pressure of the battery cell 20 reaches the bursting pressure, it is more easily broken under the action of the internal pressure to form an opening allowing gases inside the battery cell 20 to flow out, thereby relieving the internal pressure from the battery cell 20.

The end cover 21 is provided with a first recess 211 and a second recess 212 at two sides thereof in the thickness direction, respectively. The first recess 211 and the second recess 212 achieve a thinning effect, so that the pressure relief portion 213 located between the first bottom surface 2111 and the second bottom surface 2121 has a thinner thickness. In this way, it is easier to form a weakened portion 214 at the pressure relief portion 213, and it is easy to ensure a consistent bursting pressure in the weakened portion 214, so that the weakened portion 214 can be opened normally under the action of the internal pressure of the battery cell 20 to relieve the pressure, which can advantageously enhance the safety of the battery cell 20.

Referring to FIGS. 3, 4, 5, and 6, in some embodiments, the second recess 212 faces the inside of the battery cell 20. The area of the second bottom surface 2121 is larger than the area of the first bottom surface 2111. The projection of the second bottom surface 2121 along the thickness direction covers the first bottom surface 2111.

Along the thickness direction of the end cover 21, the end cover 21 has a first surface 217 which faces away from the inside of the battery cell 20 and a second surface 218 facing the inside of the battery cell 20. Here, the first recess 211 is recessed from the first surface 217 to the second surface 218, and the second recess 212 is recessed from the second surface 218 to the first surface 217, so that the first recess 211 faces away from the inside of the battery cell 20, and the second recess 212 faces the inside of the battery cell 20.

Along the thickness direction of the end cover 21, the first bottom surface 2111 may also be regarded as a surface of the pressure relief portion 213 that faces away from the inside of the battery cell 20, and the second bottom surface 2121 may also be regarded as a surface of the pressure relief portion 213 that faces toward the inside of the battery cell 20.

The area of the second bottom surface 2121 is larger than the area of the first bottom surface 2111, and the second bottom surface 2121 corresponds to the position of the first bottom surface 2111, so that the projection of the second bottom surface 2121 along the thickness direction can cover the first bottom surface 2111.

The second bottom surface 2121 faces the inside of the battery cell 20, the area of the second bottom surface 2121 is larger than the area of the first bottom surface 2111, and the projection of the second bottom surface 2121 along the thickness direction covers the first bottom surface 2111. In this way, when the internal pressure of the battery cell 20 reaches the bursting pressure, the internal pressure can act on the second bottom surface 2121 over a large range, so that the pressure relief portion 213 can be deformed along the second bottom surface 2121 in a direction toward the first bottom surface 2111. While the pressure relief portion 213 is deformed, the weakened portion 214 arranged at the pressure relief portion 213 is more easily broken, thereby relieving the internal pressure from the battery cell 20. If the area of the second bottom surface 2121 is smaller than the area of the first bottom surface 2111, the internal pressure may act on the second bottom surface 2121 in a smaller range, such that the pressure relief portion 213 is less likely to be deformed along the second bottom surface 2121 in the direction toward the first bottom surface 2111, which is not advantageous in breakage of the weakened portion 214 arranged at the pressure relief portion 213.

Referring to FIGS. 3, 4, 5, 6, and 7, FIG. 7 is a schematic structural view of the front side of the end cover 21 (provided with a protector 220) according to some embodiments of the present application. In some embodiments, along the thickness direction, the end cover 21 has a first surface 217 which faces away from the inside of the battery cell 20. The first surface 217 is provided with a protrusion 219, the protrusion 219 has a mounting surface 2191 which faces away from the first surface 217, and the first recess 211 is recessed from the mounting surface 2191 to the inside of the end cover 21. The mounting surface 2191 is used for arrangement of a protector 220 thereon.

The protrusion 219 is a protruding structure protruding from the first surface 217. The mounting surface 2191 is a surface of the protrusion 219 that faces away from the first surface 217 along the thickness direction. Optionally, the mounting surface 2191 is a flat surface, and the mounting surface 2191 is parallel to the first surface 217.

The first recess 211 is recessed from the mounting surface 2191 toward the direction of the second surface 218, and the first bottom surface 2111 extends beyond the first surface 217 in a direction from the first surface 217 toward the second surface 218 along the thickness direction. In this embodiment, the protrusion 219 has an annular structure. The inner surface of the protrusion 219 is part of the side surface of the first recess 211.

The protector 220 is arranged on the mounting surface 2191 to cover the first recess 211 and shield the pressure relief portion 213. Referring to FIG. 7, the protector 220 may be a sheet structure, and the protector 220 may be adhered to the mounting surface 2191.

The protrusion 219 is arranged on the first surface 217 to facilitate arrangement of the protector 220 on the protrusion 219, so that the protector 220 can serve to protect the weakened portion 214 to reduce the risk of early breakage of the weakened portion 214 by an external force. In addition, the protector 220 shields the weakened portion 214 and can reduce the risk that external impurities such as dust fall into the weakened portion 214. Furthermore, the protector 220 can also reduce the risk of entry of an electrolyte into the pressure relief portion 213 during injection of the electrolyte. The first recess 211 is recessed from the mounting surface 2191 to the inside of the end cover 21. In this way, the protrusion 219 may be manufactured by means of shaping by stamping, which is simple and convenient and is easy in operation, and which can easily ensure a consistent bursting pressure in a plurality of shaped end covers 21.

Referring to FIGS. 3, 4, 5, 6, and 7, in some embodiments, along the thickness direction, the end cover 21 has a second surface 218 facing the inside of the battery cell 20, and the second recess 212 is recessed from the second surface 218 in a direction close to the first surface 217. The side surface of the second recess 212 intersects the second surface 218 to form a contour line 2122, and the projection of the protrusion 219 is located within the contour line 2122.

The contour line 2122 is a line at which the side surface of the second recess 212 intersects the second surface 218. The contour line 2122 surrounds the outside of the protrusion 219, so that the projection of the protrusion 219 along the thickness direction is located within the contour line 2122.

The projection of the protrusion 219 along the thickness direction is located within the contour line 2122, so that the protrusion 219 can be shaped by stamping. For example, it is possible to firstly stamp the first recess 211 and then stamp the second recess 212, and a protruding portion is formed on the first surface 217 during the stamping of the second recess 212. Such a shaping mode is simple and convenient, is easy in operation, and can easily ensure a consistent bursting pressure in a plurality of shaped end covers 21.

Referring to FIGS. 5, 6, 7, and 8, FIG. 8 is a schematic structural view of the reverse side of the end cover 21 according to some embodiments of the present application. In some embodiments, the contour line 2122 is of a rectangular shape, and the protrusion 219 is in an annular structure. The annular structure is of a rectangular shape. The length of a long side of the contour line 2122 is greater than the spacing between two outer surfaces of the protrusion 219 that are opposed to each other along a length direction of the contour line 2122, and the length of a short side of the contour line 2122 is greater than the spacing between two outer surfaces of the protrusion 219 that are opposed to each other along a width direction of the contour line 2122.

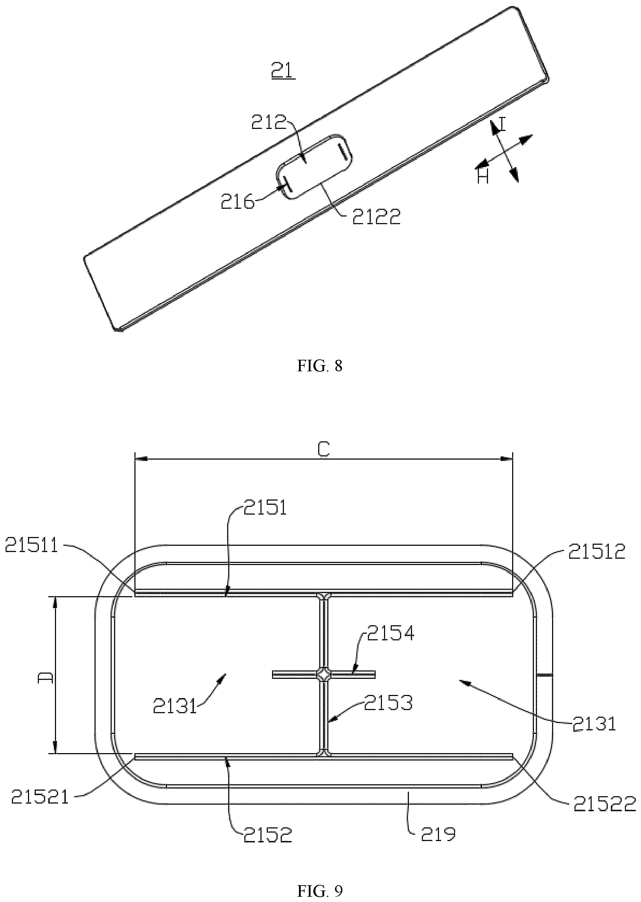

The contour line 2122 has a rectangular shape with long sides and short sides, where the length of the long sides is greater than the length of the short sides. Referring to FIG. 8, the length direction of the contour line 2122 refers to a direction in which the long side of the contour line 2122 extends, namely, a direction H shown in FIG. 8. The width direction of the contour line 2122 refers to a direction in which the short side of the contour line 2122 extends, namely, a direction I shown in FIG. 8.

The length of the long side of the contour line 2122 is greater than the spacing between two outer surfaces of the protrusion 219 that are opposed to each other along the length direction of the contour line 2122, and the length of the short side of the contour line 2122 is greater than the spacing between two outer surfaces of the protrusion 219 that are opposed to each other along the width direction of the contour line 2122, so that there is an interval between the outer surface of the protrusion 219 and the contour line 2122 so as to facilitate the formation of the protrusion 219 on the first surface 217 during stamping of the second recess 212 by a stamping device.

Referring to FIGS. 5, 6, 7, and 8, in some embodiments, a first notched groove 215 is arranged in the pressure relief portion 213, and the weakened portion 214 is formed at a position of the pressure relief portion 213 where the first notched groove 215 is arranged.

The first notched groove 215 is a groove body arranged in the pressure relief portion 213, and the first notched groove 215 may be arranged in the first bottom surface 2111, or may be arranged in the second bottom surface 2121. When the first notched groove 215 is arranged in the first bottom surface 2111, the weakened portion 214 is a portion of the pressure relief portion 213 that is located between the second bottom surface 2121 and the bottom surface of the first notched groove 215. When the first notched groove 215 is arranged in the second bottom surface 2121, the weakened portion 214 is a portion of the pressure relief portion 213 that is located between the first bottom surface 2111 and the bottom surface of the first notched groove 215. The cross section of the first notched groove 215 may be a V shape, a trapezoid, a semicircle, or the like, and is not limited in the present application. The first notched groove 215 may be shaped in a variety of ways, for example, shaped by stamping, or shaped by milling, or the like.

The first notched groove 215 is arranged in the pressure relief portion 213 to form the weakened portion 214, which is simple and convenient, is easy in machining, and involves low production cost. In addition, the first notched groove 215 may be shaped by means of stamping. Since the end cover 21 is provided with the first recess 211 and the second recess 212 such that the pressure relief portion 213 has a thinner thickness, the depth of the first notched groove 215 does not have to be too deep, whereby the material accumulation during stamping of the first notched groove 215 can be reduced, and a consistent bursting pressure in a plurality of shaped end covers 21 can be easily ensured.

In some other embodiments, the weakened portion 214 is formed by an annealing treatment of the pressure relief portion 213.

Annealing is a metal heat treatment process, which means slowly heating a metal to a certain temperature, maintaining the temperature for a sufficient time, and then cooling the metal at a suitable rate. Its purpose is to reduce hardness, improve machinability, reduce residual stress, stabilize the size, reduce the tendency of deformation and crack, refine crystal grains, adjust the texture, and eliminate texture defects. For example, the pressure relief portion 213 may be welded by laser. The high temperature generated by laser welding will act on the pressure relief portion 213, whereby the pressure relief portion 213 will be annealed so as to form a weakened portion 214 at the welded position. For another example, the pressure relief portion 213 may also be annealed by baking the pressure relief portion 213, so as to form a weakened portion 214 at the baked position.

In some embodiments, the pressure relief portion 213 has a pressure relief region 2131, and the first notched groove 215 is arranged along the edge of the pressure relief region 2131. The pressure relief region 2131 is configured to be opened with the first notched groove 215 as a boundary when pressure is to be relieved from the battery cell 20.

The pressure relief region 2131 may be regarded as a region of the pressure relief portion 213 delimited by the inner side surface of the first notched groove 215. Taking the first notched groove 215 having a rectangular inner side surface as an example, the pressure relief region 2131 is a rectangular part of the pressure relief portion 213 delimited by the inner side surface of the first notched groove 215. The first notched groove 215 may also be a linear groove extending along a bending trajectory. For example, if the bending trajectory is a U-shaped trajectory, the pressure relief region 2131 is a U-shaped part of the pressure relief portion 213 delimited by the bending trajectory. For another example, if the bending trajectory is a rectangular trajectory, the pressure relief region 2131 is a rectangular part of the pressure relief portion 213 delimited by the bending trajectory. If the first notched groove 215 is a linear groove extending along a bending trajectory, when the internal pressure of the battery cell 20 reaches the bursting pressure, the pressure relief region 2131 may be opened with the first notched groove 215 as a boundary to relieve the pressure inside the battery cell 20.

Since the notch is arranged along the edge of the pressure relief region 2131, when pressure is to be relieved from the battery cell 20, the pressure relief region 2131 will be opened along the edge to provide a large opening allowing gases to pass therethrough.

Referring to FIGS. 5, 6, 7, and 8, in some embodiments, a second notched groove 216 is arranged in the pressure relief portion 213, and the pressure relief region 2131 is configured to be opened with the second notched groove 216 as a rotating axis when pressure is to be relieved from the battery cell 20.

The second notched groove 216 is a groove body arranged in the pressure relief portion 213. The second notched groove 216 may be arranged in the first bottom surface 2111, or may be arranged in the second bottom surface 2121. The cross section of the second notched groove 216 may be a V shape, a trapezoid, a semicircle, or the like, and is not limited in the present application. The second notched groove 216 may be shaped in a variety of ways, for example, shaped by stamping, or shaped by milling, or the like.

When pressure is to be relieved from the battery cell 20, the pressure relief region 2131 can be opened by turning outward around the second notched groove 216 as a rotating axis, so as to form a large opening allowing gases to pass therethrough.

The second notched groove 216 is arranged in the pressure relief portion 213 such that the pressure relief portion 213 has lower strength at the position of the second notched groove 216. When pressure is to be relieved from the battery cell 20, the first notched groove 215 is cracked first to allow the gases in the battery cell 20 to flow out to relieve the pressure. Meanwhile, since the second notched groove 216 is arranged, the strength of the pressure relief portion 213 is weakened, so that the pressure relief region 2131 is easily turned outward around the second notched groove 216 as a rotating axis under the action of the gases so as to open a larger opening to achieve rapid pressure relief.

In some embodiments, one of the first notched groove 215 and the second notched groove 216 is arranged in the first bottom surface 2111, and the other of the first notched groove 215 and the second notched groove 216 is arranged in the second bottom surface 2121.

The first notched groove 215 and the second notched groove 216 are located at two sides of the pressure relief region 2131 along the thickness direction of the end cover 21, respectively. When the first notched groove 215 is arranged in the first bottom surface 2111, the second notched groove 216 is arranged in the second bottom surface 2121. When the first notched groove 215 is arranged in the second bottom surface 2121, the second notched groove 216 is arranged in the first bottom surface 2111.

One of the first notched groove 215 and the second notched groove 216 is arranged in the first bottom surface 2111, and the other of the first notched groove 215 and the second notched groove 216 is arranged in the second bottom surface 2121, so that the first notched groove 215 and the second notched groove 216 are shaped without interfering with each other, which can easily ensure a consistent bursting pressure in a plurality of shaped end covers 21.

In some embodiments, the first notched groove 215 is arranged in the first bottom surface 2111, and the second notched groove 216 is arranged in the second bottom surface 2121.

The first notched groove 215 is arranged in the first bottom surface 2111, so that the weakened portion 214 only needs to overcome less tension when cracking and is easily crackable. The second notched groove 216 is arranged in the second bottom surface 2121, so that the pressure relief region 2131 only needs to overcome less tension when turning and is easily turnable.

In some embodiments, the pressure relief portion 213 has a thickness at the position where the first notched groove 215 is arranged smaller than a thickness at the position of the second notched groove 216.

The pressure relief portion 213 has a smaller thickness at the position of the first notched groove 215. That is to say, the first notched groove 215 has a larger depth. The pressure relief portion 213 has a larger thickness at the position of the second notched groove 216. That is to say, the second notched groove 216 has a smaller depth.

In this way, the pressure relief portion 213 has higher strength at the position of the second notched groove 216, which is not likely to be cracked prior to the first notched groove 215 under the action of the internal pressure. Thus, it is ensured that when pressure is to be relieved from the battery cell 20, the first notched groove 215 is cracked first to allow the gases in the battery cell 20 to flow out to relieve the pressure. Then, the pressure relief region 213 is turned outward around the second notched groove 216 as a rotating axis under the action of the gases so as to open a larger opening to achieve rapid pressure relief.

Referring to FIG. 9, FIG. 9 is a schematic structural view of the first notched groove 215 according to some embodiments of the present application. In some embodiments, the first notched groove 215 comprises a first groove section 2151, a second groove section 21152, and a third groove section 2153. The first groove section 2151 and the second groove section 21152 are arranged in parallel, and the third groove section 2153 intersects the first groove section 2151 and the second groove section 21152, respectively, so as to divide the pressure relief portion 213 into two pressure relief regions 2131. The pressure relief regions 2131 are provided with the second notched grooves 216 in a one-to-one correspondence manner.

The first groove section 2151, the second groove section 21152, and the third groove section 2153 may each be a straight-linear groove extending along a straight-linear trajectory. Here, the first groove section 2151 and the second groove section 21152 are parallel to each other. The third groove section 2153 intersects the first groove section 2151 and the second groove section 21152, and the third groove section 2153 may be partially located in a region between the first groove section 2151 and the second groove section 21152, and partially located in a region outside the first groove section 2151 and the second groove section 21152. In other words, the third groove section 2153 may extend beyond the first groove section 2151 and/or the second groove section 21152. Of course, the third groove section 2153 may also be wholly located in the region between the first groove section 2151 and the second groove section 21152.

The third groove section 2153 may be perpendicular to the first groove section 2151, or may be formed at an acute angle relative to the first groove section 2151. When the third groove section 2153 is perpendicular to the first groove section 2151, and the third groove section 2153 is wholly located in the region between the first groove section 2151 and the second groove section 21152, the first groove section 2151, the second groove section 21152, and the third groove section 2153 are combined to form an "H"-shaped structure.

The first groove section 2151, the second groove section 21152, and the third groove section 2153 divide the pressure relief portion 213 into two pressure relief regions 2131, and each pressure relief region 2131 is provided with one second notched groove 216. When pressure is to be relieved from the battery cell 20, each pressure relief region 2131 can be opened by turning around the corresponding second notched groove 216 as the rotating axis.

The first groove section 2151, the second groove section 21152, and the third groove section 2153 jointly define two pressure relief regions 2131 partitioned by the third groove section 2153. During pressure relief, the two pressure relief regions 2131 can be opened rapidly in such a manner that they are opened oppositely, whereby a sufficient pressure relief area is ensured, while the pressure relief regions 2131 are opened with improved efficiency to achieve rapid pressure relief so as to enhance the safety of the battery cell 20.

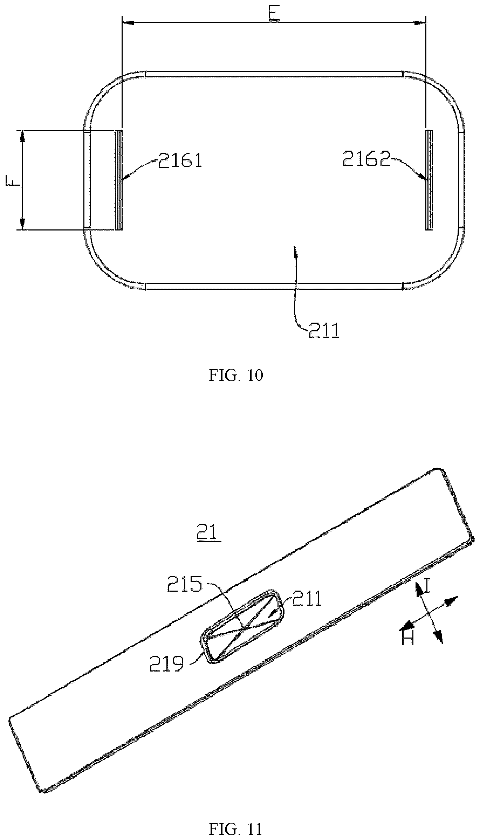

Referring to FIGS. 9 and 10, FIG. 10 is a schematic structural view of the second notched groove 216 according to some embodiments of the present application. In some embodiments, the first groove section 2151 comprises a first end 21511 and a second end 21512, and the second groove section 21152 comprises a third end 21521 and a fourth end 21522. The first end 21511 is opposed to the third end 21521. The second notched groove 216 extending along a line connecting the first end 21511 and the third end 21521 is a first groove 2161, and the second notched groove 216 extending along a line connecting the second end 21512 and the fourth end 21522 is a second groove 2162. The first groove 2161 is arranged in parallel to the second groove 2162.

The first end 21511 and the second end 21512 are the two ends of the first groove section 2151. The third end 21521 and the fourth end 21522 are the two ends of the second groove section 21152. Here, the first end 21511 and the third end 21521 are opposed to each other. The second end 21512 and the fourth end 21522 are opposed to each other. The first end 21511 is closer to the third end 21521 than the fourth end 21522. The second end 21512 is closer to the fourth end 21522 than the third end 21521.

The sentence "the second notched groove 216 extending along a line connecting the first end 21511 and the third end 21521 is a first groove 2161" may be understood as follows: the first groove 2161 refers in particular to the second notched groove 216 located near the line connecting the first end 21511 and the third end 21521 and extending in the same direction as the line connecting the first end 21511 and the third end 21521.

The sentence "the second notched groove 216 extending along a line connecting the second end 21512 and the fourth end 21522 is a second groove 2162" may be understood as follows: the second groove 2162 refers in particular to the second notched groove 216 located near the line connecting the second end 21512 and the fourth end 21522 and extending in the same direction as the line connecting the second end 21512 and the fourth end 21522.

The first groove 2161 and the second groove 2162 are arranged in parallel, such that the two pressure relief regions 2131 are not likely to interfere with each other when pressure is to be relieved from the battery cell 20.

Referring to FIGS. 9 and 10, in some embodiments, the line connecting the first end 21511 and the third end 21521 has a length of D in unit of mm. The first groove 2161 has a length of F in unit of mm. 0.5≤D-F≤3 is satisfied.

The difference D-F between the length of the line connecting the first end 21511 and the third end 21521 and the length of the first groove 2161 may be equal to 0.5 mm, 0.8 mm, 1 mm, 1.2 mm, 1.5 mm, 1.8 mm, 2 mm, 2.2 mm, 2.5 mm, 2.8 mm, 3 mm, or the like.

The length of the first groove 2161 is smaller by 0.5 to 3 mm than the length of the line connecting the first end 21511 and the third end 21521, so that the length of the first groove 2161 can be set as long as possible provided that the first groove 2161 and the first notched groove 215 do not interfere with each other. If D-F is less than 0.5 mm, the first groove 2161 is closely distanced from the first notched groove 215, and the first groove 2161 easily interferes with the first notched groove 215 during shaping of the first groove 2161 and the first notched groove 215, thereby affecting the bursting pressure of the battery cell 20. If D-F is more than 3 mm, the first groove 2161 is far distanced from the first groove section 2151 or the second groove section 2152, such that the pressure relief portion 213 has higher strength at a straight line where the first groove 2161 is located, and the pressure relief region 2131 can hardly be turned outward around the first groove 2161.

Referring to FIGS. 9 and 10, in some embodiments, the first groove section 2151 has a length of C in unit of mm, and there is a spacing of E in unit of mm between the first groove 2161 and the second groove 2162, where -2≤C-E≤2 is satisfied.

The difference C-E between the length of the first groove section 2151 and the spacing between the first groove 2161 and the second groove 2162 may be equal to -2, -1.8, -1.5, -1.2, -1, -0.8, -0.5, -0.2, 0, 0.2, 0.5, 0.8, 1, 1.2, 1.5, 1.8, 2, or the like.

If C-E is less than -2, it is indicated that there is a large spacing between the first groove 2161 and the second groove 2162, and at least one of the first groove 2161 and the second groove 2162 is far away from the first notched groove 215. In this way, the pressure relief region 2131 can hardly be turned outward around the second notched groove 216 that is far away from the first notched groove 215. If C-E is more than 2, it is indicated that there is a small spacing between the first groove 2161 and the second groove 2162, and at least one of the first groove 2161 and the second groove 2162 is close to the third groove section 2153, such that the corresponding pressure relief region 2131 can only be turned outward and opened by a small area, which is not advantageous in rapid pressure relief.

Referring to FIGS. 9 and 10, in some embodiments, the first notched groove 215 further comprises a fourth groove section 2154, and the fourth groove section 2154 is located between the first groove section 2151 and the second groove section 21152 and intersects the third groove section 2153.

The fourth groove section 2154 may be a straight-linear groove, or may be an arcuate groove. The fourth groove section 2154 is located in the region between the first groove section 2151 and the second groove section 21152. The fourth groove section 2154 and the third groove section 2153 may intersect once or multiple times.

The fourth groove section 2154 is arranged to increase the range of the weakened portion 214, so that the weakened portion 214 is more easily opened under the action of the internal pressure of the battery cell 20 to relieve pressure. In addition, when the battery cell 20 begins to release pressure, the pressure relief portion 213 may crack along the third groove section 2153 and the fourth groove section 2154 to partially relieve pressure before the pressure relief regions 2131 are completely opened, so as to enhance the safety of the battery cell 20.

In some embodiments, the fourth groove section 2154 is parallel to the first groove section 2151, and the third groove section 2153 is perpendicular to the first groove section 2151.

In this embodiment, the fourth groove section 2154 is a straight-linear groove extending along a straight-linear trajectory. The fourth groove section 2154 is parallel to the first groove section 2151 and parallel to the second groove section 21152. The third groove section 2153 is perpendicular to the first groove section 2151. In this way, the fourth groove section 2154 is also perpendicular to the third groove section 2153.

The first groove section 2151, the second groove section 21152, the third groove section 2153, and the fourth groove section 2154 are combined to form a structure shaped like a Chinese character " 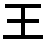 ".

The fourth groove section 2154 is parallel to the first groove section 2151, so that the fourth groove section 2154 can be easily cracked. The third groove section 2153 is perpendicular to the first groove section 2151, such that the third groove section 2153 has a shorter length than that of a third groove section 2153 formed at an acute angle relative to the first groove section 2151 and can be quickly cracked when pressure is to be relieved from the battery cell 20.

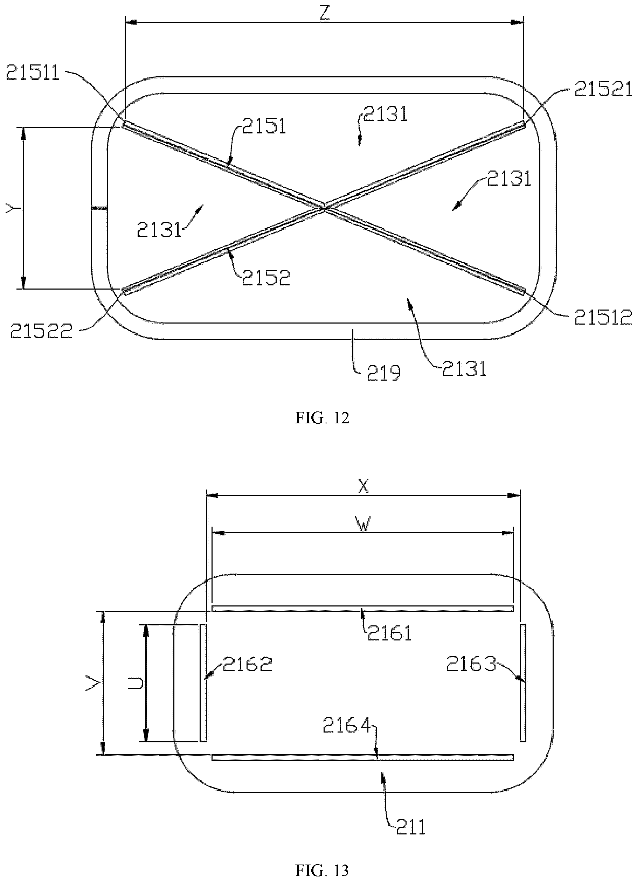

Referring to FIGS. 11, 12, and 13, FIG. 11 is a schematic structural view of the front side of an end cover 21 according to some other embodiments of the present application. FIG. 12 is a schematic structural view of a first notched groove 215 according to some other embodiments of the present application. FIG. 13 is a schematic structural view of a second notched groove 216 according to some other embodiments of the present application. In some other embodiments, the first notched groove 215 comprises a first groove section 2151 and a second groove section 21152, and the first groove section 2151 and the second groove section 21152 are arranged crosswise to divide the pressure relief portion 213 into four pressure relief regions 2131.

In this embodiment, each of the first groove section 2151 and the second groove section 21152 is a straight-linear groove extending along a straight-linear trajectory. The first groove section 2151 and the second groove section 21152 are arranged crosswise, so that the first groove section 2151 and the second groove section 21152 are combined to form an "X"-shaped structure.

The first groove section 2151 and the second groove section 21152 are arranged crosswise, such that when pressure is to be relieved from the battery cell 20, the first groove section 2151 and the second groove section 21152 are most likely to crack at their intersection point and can crack toward both ends of the first groove section 2151 and the second groove section 21152 after the intersection point is cracked, whereby the entire first groove section 2151 and second groove section 21152 are cracked quickly to relieve pressure at a fast speed, which can advantageously enhance the safety of the battery cell 20.

In some embodiments, the pressure relief regions 2131 are provided with the second notched grooves 216 in a one-to-one correspondence manner.

The sentence "the pressure relief regions 2131 are provided with the second notched grooves 216 in a one-to-one correspondence manner" means that one pressure relief region 2131 is provided with one second notched groove 216. A one-to-one correspondence relationship is formed between the second notched grooves 216 and the pressure relief regions 2131.

Since the first groove section 2151 and the second groove section 21152 are arranged crosswise, the pressure relief portion 213 is divided into four pressure relief regions 2131. Each pressure relief region 2131 is correspondingly provided with one second notched groove 216. In this way, when pressure is to be relieved from the battery cell 20, each pressure relief region 2131 can be turned outward around the corresponding second notched groove 216 as a rotating axis to open a larger opening to achieve rapid pressure relief.

Referring to FIGS. 11, 12, and 13, in some embodiments, the first groove section 2151 comprises a first end 21511 and a second end 21512, and the second groove section 21152 comprises a third end 21521 and a fourth end 21522. The second notched groove 216 extending along a line connecting the first end 21511 and the third end 21521 is a first groove 2161. The second notched groove 216 extending along a line connecting the first end 21511 and the fourth end 21522 is a second groove 2162. The second notched groove 216 extending along a line connecting the second end 21512 and the third end 21521 is a third groove 2163. The second notched groove 216 extending along a line connecting the second end 21512 and the fourth end 21522 is a fourth groove 2164. The first groove 2161 is arranged in parallel to the fourth groove 2164, and the second groove 2162 is arranged in parallel to the third groove 2163.

The first end 21511 and the second end 21512 are the two ends of the first groove section 2151. The third end 21521 and the fourth end 21522 are the two ends of the second groove section 21152.

The sentence "the second notched groove 216 extending along a line connecting the first end 21511 and the third end 21521 is a first groove 2161" may be understood as follows: the first groove 2161 refers in particular to the second notched groove 216 located near the line connecting the first end 21511 and the third end 21521 and extending in the same direction as the line connecting the first end 21511 and the third end 21521.

The sentence "the second notched groove 216 extending along a line connecting the first end 21511 and the fourth end 21522 is a second groove 2162" may be understood as follows: the second groove 2162 refers in particular to the second notched groove 216 located near the line connecting the first end 21511 and the fourth end 21522 and extending in the same direction as the line connecting the first end 21511 and the fourth end 21522.

The sentence "the second notched groove 216 extending along a line connecting the second end 21512 and the third end 21521 is a third groove 2163" may be understood as follows: the third groove 2163 refers in particular to the second notched groove 216 located near the line connecting the second end 21512 and the third end 21521 and extending in the same direction as the line connecting the second end 21512 and the third end 21521.

The sentence "the second notched groove 216 extending along a line connecting the second end 21512 and the fourth end 21522 is a fourth groove 2164" may be understood as follows: the fourth groove 2164 refers in particular to the second notched groove 216 located near the line connecting the second end 21512 and the fourth end 21522 and extending in the same direction as the line connecting the second end 21512 and the fourth end 21522.

The first groove 2161 and the fourth groove 2164 are arranged in parallel, and the second groove 2162 and the third groove 2163 are arranged in parallel. In this way, when pressure is to be relieved from the battery cell 20, the four pressure relief regions 2131 are not likely to interfere with one another and can be opened simultaneously to form a larger opening allowing gases to flow out therethrough.

Referring to FIGS. 11, 12, and 13, in some embodiments, the line connecting the first end 21511 and the third end 21521 has a length of Z in unit of mm, and the first groove 2161 has a length of W in unit of mm, where 0.5≤Z-W≤2.5 is satisfied; and/or the line connecting the first end 21511 and the fourth end 21522 has a length of Y in unit of mm, and the second groove 2162 has a length of U in unit of mm, where 0.5≤Y-U≤2.5 is satisfied.

The difference Z-W between the length of the line connecting the first end 21511 and the third end 21521 and the length of the first groove 2161 may be equal to 0.5 mm, 0.8 mm, 1 mm, 1.2 mm, 1.5 mm, 1.8 mm, 2 mm, 2.2 mm, 2.5 mm, or the like.

The difference Y-U between the length of the line connecting the first end 21511 and the fourth end 21522 and the length of the second groove 2162 may be equal to 0.5 mm, 0.8 mm, 1 mm, 1.2 mm, 1.5 mm, 1.8 mm, 2 mm, 2.2 mm, 2.5 mm, or the like.

The length of the first groove 2161 is smaller by 0.5 to 2.5 mm than the length of the line connecting the first end 21511 and the third end 21521, so that the length of the first groove 2161 can be set as long as possible provided that the first groove 2161 and the first notched groove 215 do not interfere with each other. If Z-W is less than 0.5 mm, the first groove 2161 is closely distanced from the first notched groove 215, and the first groove 2161 easily interferes with the first notched groove 215 during shaping of the first groove 2161 and the first notched groove 215, thereby affecting the bursting pressure of the battery cell 20. IfZ-W is more than 2.5 mm, the first groove 2161 is far distanced from the first groove section 2151 and the second groove section 21152, such that the pressure relief portion 213 has higher strength at a straight line where the first groove 2161 is located, and the pressure relief region 2131 can hardly be turned outward around the first groove 2161. The length of the second groove 2162 is smaller by 0.5 to 2.5 mm than the length of the line connecting the first end 21511 and the fourth end 21522, so that the length of the second groove 2162 can be set as long as possible provided that the second groove 2162 and the first notched groove 215 do not interfere with each other. If Y-U is less than 0.5 mm, the second groove 2162 is closely distanced from the first notched groove 215, and the second groove 2162 easily interferes with the first notched groove 215 during shaping of the second groove 2162 and the first notched groove 215, thereby affecting the bursting pressure of the battery cell 20. If Y-U is more than 2.5 mm, the second groove 2162 is far distanced from the first groove section 2151 and the second groove section 21152, such that the pressure relief portion 213 has higher strength at a straight line where the second groove 2162 is located, and the pressure relief region 2131 can hardly be turned outward around the second groove 2162.

Referring to FIGS. 11, 12, and 13, in some embodiments, there is a spacing of X in unit of mm between the second groove 2162 and the third groove 2163 along a direction of extension of the first groove 2161, where -2≤Z-X≤2 is satisfied; and/or there is a spacing of V in unit of mm between the first groove 2161 and the fourth groove 2164 along a direction of extension of the second groove 2162, where -2≤Y-V≤2 is satisfied.

The difference Z-X between the length of the line connecting the first end 21511 and the third end 21521 and the spacing between the second groove 2162 and the third groove 2163 along the direction of extension of the first groove 2161 may be equal to -2, -1.8, -1.5, -1.2, -1, -0.8, -0.5, -0.2, 0, 0.2, 0.5, 0.8, 1, 1.2, 1.5, 1.8, 2, or the like.

The difference Y-V between the length of the line connecting the first end 21511 and the fourth end 21522 and the spacing between the first groove 2161 and the fourth groove 2164 along the direction of extension of the second groove 2162 may be equal to -2, -1.8, -1.5, -1.2, -1, -0.8, -0.5, -0.2, 0, 0.2, 0.5, 0.8, 1, 1.2, 1.5, 1.8, 2, or the like.

If Z-X is less than -2, it is indicated that there is a large spacing between the second groove 2162 and the third groove 2163, and at least one of the second groove 2162 and the third groove 2163 is far away from the first notched groove 215. In this way, the pressure relief region 2131 can hardly be turned outward around the second notched groove 216 that is far away from the first notched groove 215. If Z-X is more than 2, it is indicated that there is a small spacing between the second groove 2162 and the third groove 2163, and at least one of the second groove 2162 and the third groove 2163 is close to the intersection point of the first groove section 2151 and the second groove section 21152, such that the corresponding pressure relief region 2131 can only be turned outward and opened by a small area, which is not advantageous in rapid pressure relief. If Y-V is less than -2, it is indicated that there is a large spacing between the first groove 2161 and the fourth groove 2164, and at least one of the first groove 2161 and the fourth groove 2164 is far away from the first notched groove 215. In this way, the pressure relief region 2131 can hardly be turned outward around the second notched groove 216 that is far away from the first notched groove 215. If Y-V is more than 2, it is indicated that there is a small spacing between the first groove 2161 and the fourth groove 2164, and at least one of the first groove 2161 and the fourth groove 2164 is close to the intersection point of the first groove section 2151 and the second groove section 21152, such that the corresponding pressure relief region 2131 can only be turned outward and opened by a small area, which is not advantageous in rapid pressure relief.

An embodiment of the present application further provides a battery cell 20. The battery cell 20 comprises an electrode assembly 22, a housing 23, and an end cover 21 described above. The housing 23 has an accommodating space with an opening at one end. The accommodating space is used for accommodating the electrode assembly 22. The end cover 21 closes the opening.

An embodiment of the present application further provides a battery 100. The battery 100 comprises a battery cell 20 described above.

An embodiment of the present application further provides an electrical device, comprising a battery 100 described above. The battery 100 is used for supplying electrical energy to the electrical device.

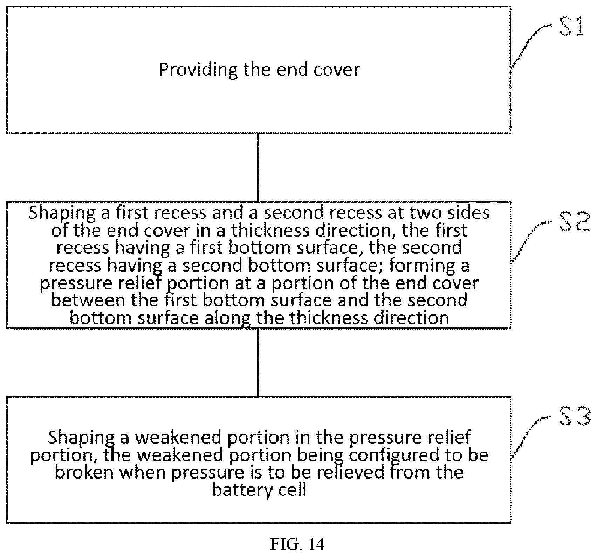

Referring to FIG. 14, FIG. 14 is a schematic block diagram of a manufacturing method according to some embodiments of the present application. An embodiment of the present application further provides a manufacturing method. The manufacturing method is used for manufacturing an end cover 21 described above. The manufacturing method comprises:
step S1 of providing the end cover 21;
step S2 of shaping a first recess 211 and a second recess 212 at two sides of the end cover 21 in a thickness direction, the first recess 211 having a first bottom surface 2111, the second recess 212 having a second bottom surface 2121; and forming a pressure relief portion 213 at a portion of the end cover 21 between the first bottom surface 2111 and the second bottom surface 2121 along the thickness direction;
step S3 of shaping a weakened portion 214 in the pressure relief portion 213, the weakened portion 214 being configured to be broken when pressure is to be relieved from the battery cell 20.

In some embodiments, the step of shaping a first recess 211 and a second recess 212 at two sides of the end cover 21 in a thickness direction comprises: shaping the first recess 211 at one side of the end cover 21 in the thickness direction by stamping; shaping the second recess 212 at the other side of the end cover 21 in the thickness direction by stamping, and forming a protrusion 219 on a surface of the end cover 21 in which the first recess 211 is shaped.

The first recess 211 is firstly stamped at one side of the end cover 21 in the thickness direction, and then the second recess 212 is stamped at the other side, and a protruding portion is formed on the first surface 217 during the stamping of the second recess 212. Such a shaping mode is simple and convenient, is easy in operation, and can easily ensure a consistent bursting pressure in a plurality of shaped end covers 21.

According to some embodiments of the present application, reference can be made to FIGS. 3 to 14.

An embodiment of the present application provides an end cover 21 for a battery cell 20. The end cover 21 is provided with a first recess 211 and a second recess 212 at two sides thereof in its thickness direction, respectively. The first recess 211 has a first bottom surface 2111, and the second recess 212 has a second bottom surface 2121. A pressure relief portion 213 is formed at a portion of the end cover 21 between the first bottom surface 2111 and the second bottom surface 2121 along the thickness direction. The pressure relief portion 213 has a weakened portion 214, and the weakened portion 214 is configured to be broken when pressure is to be relieved from the battery cell 20. The second recess 212 faces the inside of the battery cell 20, and the area of the second bottom surface 2121 is larger than the area of the first bottom surface 2111. The projection of the second bottom surface 2121 along the thickness direction covers the first bottom surface 2111.

The end cover 21 is provided with a first recess 211 and a second recess 212 at two sides thereof in the thickness direction, respectively. The first recess 211 and the second recess 212 achieve a thinning effect, so that the pressure relief portion 213 located between the first bottom surface 2111 and the second bottom surface 2121 has a thinner thickness. In this way, it is easier to form a weakened portion 214 at the pressure relief portion 213, and it is easy to ensure a consistent bursting pressure in the weakened portion 214, so that the weakened portion 214 can be opened normally under the action of the internal pressure of the battery cell 20 to relieve the pressure, which can advantageously enhance the safety of the battery cell 20. The second bottom surface 2121 faces the inside of the battery cell 20, the area of the second bottom surface 2121 is larger than the area of the first bottom surface 2111, and the projection of the second bottom surface 2121 along the thickness direction covers the first bottom surface 2111. In this way, when the internal pressure of the battery cell 20 reaches the bursting pressure, the internal pressure can act on the second bottom surface 2121 over a large range, so that the pressure relief portion 213 can be deformed along the second bottom surface 2121 in a direction toward the first bottom surface 2111. While the pressure relief portion 213 is deformed, the weakened portion 214 arranged at the pressure relief portion 213 is more easily broken, thereby relieving the internal pressure from the battery cell 20. If the area of the second bottom surface 2121 is smaller than the area of the first bottom surface 2111, the internal pressure may act on the second bottom surface 2121 in a smaller range, such that the pressure relief portion 213 is less likely to be deformed along the second bottom surface 2121 in the direction toward the first bottom surface 2111, which is not advantageous in breakage of the weakened portion 214 arranged at the pressure relief portion 213.

A first notched groove 215 is arranged in the pressure relief portion 213, and the weakened portion 214 is formed at a position of the pressure relief portion 213 where the first notched groove 215 is arranged. A second notched groove 216 is arranged in the pressure relief portion 213, and the pressure relief region 2131 is configured to be opened with the second notched groove 216 as a rotating axis when pressure is to be relieved from the battery cell 20. The second notched groove 216 is arranged in the pressure relief portion 213 such that the pressure relief portion 213 has lower strength at the position of the second notched groove 216. When pressure is to be relieved from the battery cell 20, the first notched groove 215 is cracked first to allow gases in the battery cell 20 to flow out to relieve the pressure. Meanwhile, since the second notched groove 216 is arranged, the strength of the pressure relief portion 213 is weakened, so that the pressure relief region 2131 is easily turned outward around the second notched groove 216 as a rotating axis under the action of the gases so as to open a larger opening to achieve rapid pressure relief.

An embodiment of the present application further provides a manufacturing method. The manufacturing method is used for manufacturing an end cover 21 described above. The manufacturing method comprises: providing the end cover 21; shaping a first recess 211 at one side of the end cover 21 in the thickness direction by stamping; shaping a second recess 212 at the other side of the end cover 21 in the thickness direction by stamping, and forming a protrusion 219 on a surface of the end cover 21 in which the first recess 211 is shaped, the first recess 211 having a first bottom surface 2111, the second recess 212 having a second bottom surface 2121; forming a pressure relief portion 213 at a portion of the end cover 21 between the first bottom surface 2111 and the second bottom surface 2121 along the thickness direction; shaping a weakened portion 214 in the pressure relief portion 213, the weakened portion 214 being configured to be broken when pressure is to be relieved from the battery cell 20. The first recess 211 is firstly stamped at one side of the end cover 21 in the thickness direction, and then the second recess 212 is stamped at the other side, and a protruding portion is formed on the first surface 217 during the stamping of the second recess 212. Such a shaping mode is simple and convenient, is easy in operation, and can easily ensure a consistent bursting pressure in a plurality of shaped end covers 21.

The above description is merely illustrative of preferred embodiments of the present application and is not intended to limit the present application. It will be understood by those skilled in the art that various modifications and variations may be made to the present application. Any modifications, equivalent alternatives, improvements and so on made within the spirit and principle of the present application are intended to be encompassed within the scope of protection of the present application.

## Claims

1. An end cover for a battery cell, wherein the end cover is provided with a first recess and a second recess at two sides of the end cover in its thickness direction, respectively, the first recess having a first bottom surface, and the second recess having a second bottom surface; and
a pressure relief portion is formed at a portion of the end cover between the first bottom surface and the second bottom surface along the thickness direction, the pressure relief portion has a weakened portion, and the weakened portion is configured to break when pressure is to be relieved from the battery cell.

2. The end cover according to claim 1, wherein the second recess faces an inside of the battery cell, an area of the second bottom surface is larger than an area of the first bottom surface, and a projection of the second bottom surface along the thickness direction covers the first bottom surface.

3. The end cover according to claim 1 or 2, wherein along the thickness direction, the end cover has a first surface facing away from an inside of the battery cell, the first surface is provided with a protrusion, the protrusion has a mounting surface facing away from the first surface, the first recess is recessed from the mounting surface to an inside of the end cover, and the mounting surface is configured for arrangement of a protector thereon.

4. The end cover according to claim 3, wherein along the thickness direction, the end cover has a second surface facing the inside of the battery cell, the second recess is recessed from the second surface in a direction close to the first surface, a side surface of the second recess intersects the second surface to form a contour line, and a projection of the protrusion is located within the contour line.

5. The end cover according to claim 4, wherein the contour line is of a rectangular shape, the protrusion is in an annular structure, the annular structure is in a rectangular shape, a length of a long side of the contour line is greater than a spacing between two outer surfaces of the protrusion that are opposed to each other along a length direction of the contour line, and a length of a short side of the contour line is greater than a spacing between two outer surfaces of the protrusion that are opposed to each other along a width direction of the contour line.

6. The end cover according to any one of claims 1 to 5, wherein a first notched groove is arranged in the pressure relief portion, and the weakened portion is formed at a position of the pressure relief portion where the first notched groove is arranged.

7. The end cover according to claim 6, wherein the pressure relief portion has a pressure relief region, the first notched groove is arranged along an edge of the pressure relief region, and the pressure relief region is configured to open with the first notched groove as a boundary when pressure is to be relieved from the battery cell.

8. The end cover according to claim 7, wherein a second notched groove is arranged in the pressure relief portion, and the pressure relief region is configured to open with the second notched groove as a rotating axis when the pressure is to be relieved from the battery cell.

9. The end cover according to claim 8, wherein one of the first notched groove and the second notched groove is arranged in the first bottom surface, and the other of the first notched groove and the second notched groove is arranged in the second bottom surface.

10. The end cover according to claim 9, wherein the pressure relief portion has a thickness at a position where the first notched groove is arranged smaller than a thickness at a position of the second notched groove.

11. The end cover according to any one of claims 8 to 10, wherein the first notched groove comprises a first groove section, a second groove section, and a third groove section, the first groove section and the second groove section are arranged in parallel, the third groove section intersects the first groove section and the second groove section respectively so as to divide the pressure relief portion into two pressure relief regions, and the pressure relief regions are provided with second notched grooves in a one-to-one correspondence manner.

12. The end cover according to claim 11, wherein the first groove section comprises a first end and a second end, the second groove section comprises a third end and a fourth end, the first end is opposed to the third end, the second notched groove extending along a line connecting the first end and the third end is a first groove, the second notched groove extending along a line connecting the second end and the fourth end is a second groove, and the first groove is arranged in parallel to the second groove.

13. The end cover according to claim 12, wherein the line connecting the first end and the third end has a length of D in units of mm, and the first groove has a length of F in units of mm, where 0.5≤D-F≤3.

14. The end cover according to claim 12, wherein the first groove section has a length of C in units of mm, and a spacing between the first groove and the second groove is E in units of mm, where -2≤C-E≤2.

15. The end cover according to any one of claims 11 to 14, wherein the first notched groove further comprises a fourth groove section, the fourth groove section located between the first groove section and the second groove section and intersecting the third groove section.

16. The end cover according to claim 15, wherein the fourth groove section is parallel to the first groove section, and the third groove section is perpendicular to the first groove section.

17. The end cover according to any one of claims 8 to 10, wherein the first notched groove comprises a first groove section and a second groove section, and the first groove section and the second groove section are arranged crosswise so as to divide the pressure relief portion into four pressure relief regions.

18. The end cover according to claim 17, wherein the pressure relief regions are provided with second notched grooves in a one-to-one correspondence manner.

19. The end cover according to claim 18, wherein the first groove section comprises a first end and a second end, the second groove section comprises a third end and a fourth end, the second notched groove extending along a line connecting the first end and the third end is a first groove, the second notched groove extending along a line connecting the first end and the fourth end is a second groove, the second notched groove extending along a line connecting the second end and the third end is a third groove, the second notched groove extending along a line connecting the second end and the fourth end is a fourth groove, the first groove is arranged in parallel to the fourth groove, and the second groove is arranged in parallel to the third groove.

20. The end cover according to claim 19, wherein the line connecting the first end and the third end has a length of Z in units of mm, and the first groove has a length of W in units of mm, where 0.5≤Z-W≤2.5; and/or
the line connecting the first end and the fourth end has a length of Y in units of mm, and the second groove has a length of U in units of mm, where 0.5≤Y-U≤2.5.

21. The end cover according to claim 20, wherein a spacing between the second groove and the third groove is X in units of mm along a direction of extension of the first groove, where -2≤Z-X≤2; and/or
a spacing between the first groove and the fourth groove is V in units of mm along a direction of extension of the second groove, where -2≤Y-V≤2.

22. A battery cell comprising:
an electrode assembly;
a housing, having an accommodating space with an opening at one end, the accommodating space configured to accommodate the electrode assembly; and
an end cover according to any one of claims 1 to 21, the end cover closing the opening.

23. A battery, comprising the battery cell according to claim 22.

24. An electrical device, comprising the battery according to claim 23, the battery configured to supply electrical energy to the electrical device.

25. A manufacturing method for manufacturing the end cover according to any one of claims 1 to 21, comprising:
providing the end cover;
shaping a first recess and a second recess at two sides of the end cover in a thickness direction, the first recess having a first bottom surface, the second recess having a second bottom surface; and forming a pressure relief portion at a portion of the end cover between the first bottom surface and the second bottom surface along the thickness direction; and
shaping a weakened portion in the pressure relief portion, the weakened portion configured to break when pressure is to be relieved from the battery cell.

26. The manufacturing method according to claim 25, wherein the step of shaping a first recess and a second recess at two sides of the end cover in a thickness direction comprises: shaping the first recess at one side of the end cover in the thickness direction by stamping;
shaping the second recess at the other side of the end cover in the thickness direction by stamping, and forming a protrusion on a surface of the end cover where the first recess is shaped.
